# EUROPEAN PATENT APPLICATION

(11) **EP 4 488 100 A1**
(43) Date of publication of application: **08.01.2025**
(21) Application number: 24183881.2
(22) Date of filing: 24.06.2024
(51) Int. Cl.: B60L 3/04, B60L 15/20, B63H 21/17, H02P 29/024, B60L 3/00

(54) **CONTROL DEVICE FOR MOTOR AND ELECTRIC PROPULSION DEVICE FOR SHIP**

(30) Priority: 06.07.2023 JP 2023111734
(71) Applicant: Mikuni Corporation, Tokyo 101-0021 (JP); Suzuki Motor Corporation, Shizuoka 432-8611 (JP)
(72) Inventor: MIURA, Osamu, Kanagawa, 250-0055 (JP); SATO, Shisei, Kanagawa, 250-0055 (JP); ETO, Yuta, Shizuoka, 432-8611 (JP)
(74) Representative: SSM Sandmair

(57) **Abstract**

A control device 10 for a motor 1 includes: a processor 20 for generating a control command for power supplied to a coil 2 of the motor 1; an inverter circuit 30 for controlling, based on the control command of the processor 20, the power supplied to the coil 2 of the motor 1; and a switching circuit 60 disposed between the inverter circuit 30 and the coil 2 of the motor 1, and configured to switch between an energized state where the inverter circuit 30 and the coil 2 are energized and a non-energized state where the inverter circuit 30 is electrically disconnected from the coil 2. The processor 20 is configured to give the switching circuit 60 a first disconnection command to switch from the energized state to the non-energized state, when rotation of the motor 1 is detected in a state where the power is not supplied to the coil 2.

## Description

### TECHNICAL FIELD

The present disclosure relates to a control device for a motor and an electric propulsion device for a ship.

### BACKGROUND

Conventionally, motors have been used to drive various devices. For example, an electric vehicle is equipped with a driving motor instead of an engine. Likewise, an electric propulsion device using a motor instead of an engine is also known as a propulsion device for a ship.

Meanwhile, if a motor rotates due to an external force when the motor is not in operation, an induced voltage is generated in a motor coil and an overvoltage may be applied to an inverter circuit, which is connected to the motor coil, and its peripheral circuit, and a battery. In this case, the inverter circuit and its peripheral circuit, and the battery may fail due to heat generation, ignition, etc. caused by overcharging or over withstanding voltage.

In this regard, Patent Document 1 describes a power conversion device configured to control an inverter to consume regenerative power generated by motor rotation when an electric vehicle is towed, and configured to control driving of a cooler to cool the heated inverter.

Although not intended to protect a circuit in case a motor rotates due to an external force, Patent Document 2 describes an electric power steering device having a function to turn off a first FET group disposed between an inverter and the motor and a second FET group configuring the inverter, when an abnormality in inverter is detected.

Further, in relation to the electric propulsion device for the ship, Patent Document 3 describes, with the objective of suppressing ship sway by a simple configuration, an electric propulsion device configured to perform control of rotating an electric motor in a state where a direction of a rotational shaft of the electric motor includes a component in an up-down direction with a clutch in a disconnected state, when the ship is stopped.

### Citation List

### Patent Literature

Patent Document 1: JP2021-176258A
Patent Document 2: JP2009-274686A
Patent Document 3: JP2020-32871A

### SUMMARY

However, the power conversion device described in Patent Document 1 requires a cooler with excellent cooling performance in order to sufficiently cool the inverter which is heated when consuming the regenerative power generated by the rotation of the motor. If the cooling performance of the cooler is insufficient, the inverter circuit may fail. Meanwhile, setting the cooling performance of the cooler with priority given to the protection of the inverter circuit could result in an increase in cost.

Note that the Patent Documents 2 and 3 do not disclose a configuration for protecting the inverter circuit and its peripheral circuit from the voltage induced in the motor coil in case the motor rotates due to the external force.

In view of the above, an object of at least some embodiments of the present invention is to provide the control device for the motor and the electric propulsion device for the ship, which have the circuit protection function with the simple configuration and high reliability.

A control device for a motor according to at least some embodiments of the present invention, includes: a processor for generating a control command for power supplied to a coil of the motor; an inverter circuit for controlling, based on the control command of the processor, the power supplied to the coil of the motor; and a switching circuit disposed between the inverter circuit and the coil of the motor, and configured to switch between an energized state where the inverter circuit and the coil are energized and a non-energized state where the inverter circuit is electrically disconnected from the coil. The processor is configured to give the switching circuit a first disconnection command to switch from the energized state to the non-energized state, when rotation of the motor is detected in a state where the power is not supplied to the coil.

According to at least some embodiments of the present invention, a processor gives a first disconnection command to a switching circuit when rotation of a motor is detected in a state where power is not supplied to a motor coil, thereby electrically disconnecting an inverter circuit from the motor coil.

Whereby, it is possible to protect, with the simple configuration and high reliability, the inverter circuit and its peripheral circuit from a voltage induced in the motor coil in case the motor rotates due to an external force.

### BRIEF DESCRIPTION OF DRAWINGS

FIG. 1 is a diagram showing a configuration example of a control device for a motor according to an embodiment.
FIG. 2 is a schematic cross-sectional view showing a configuration example of the motor and a sensor.
FIG. 3 is a diagram showing the configuration in the vicinity of a switching contact unit of the control device according to an embodiment.
FIG. 4 is a view showing the schematic configuration of an electric propulsion device according to an embodiment.
FIG. 5 is a timing chart showing an operation of the control device according to an embodiment, and shows a case where the motor is not forcibly turned by an external force.
FIG. 6 is a timing chart showing an operation of the control device according to an embodiment, and shows a case where the motor is forcibly turned by the external force.
FIG. 7 is a flowchart showing a procedure for controlling the motor according to an embodiment.

### DETAILED DESCRIPTION

A control device for a motor according to some embodiments of the present invention will be described below with reference to the accompanying drawings.

In the following embodiments, a driving motor for driving various devices is assumed as an object to be controlled by the control device. In some embodiments, the motor as the control object is a driving motor for an electric vehicle or a motor for an electric propulsion device for a ship.

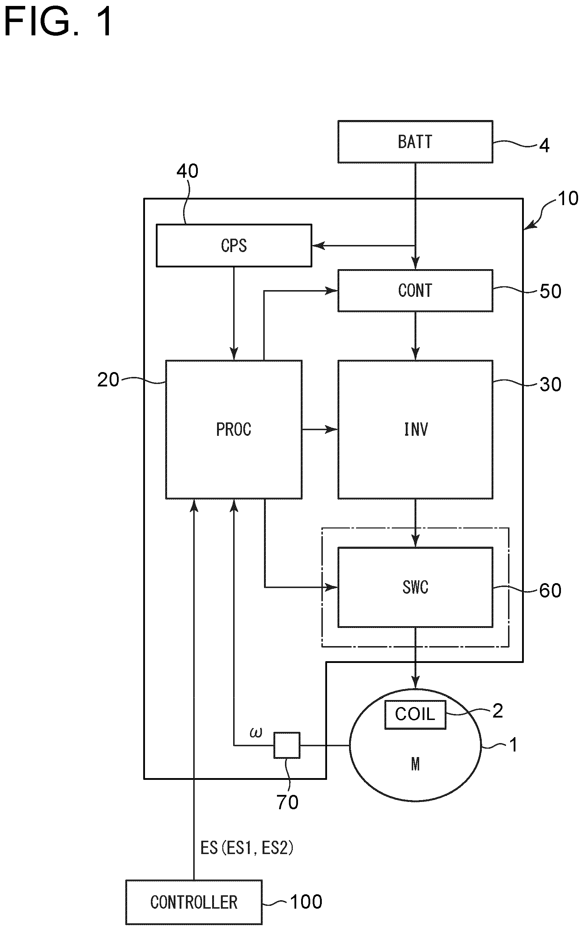

FIG. 1 is a diagram showing a configuration example of the control device for the motor according to an embodiment.

In some embodiments, as shown in FIG. 1, a control device 10 for a motor 1 includes a processor 20 for generating a control command for power supply to a coil 2 of the motor 1, and an inverter circuit 30 for controlling power supply to the coil 2 of the motor 1.

Each part of the control device 10 can be operated by receiving power supply from a battery 4. Each part of the control device 10 may supply power through a power supply switch. The control device 10 may include a control power supply circuit 40 or a switching contact unit 50 as power supply part for each part of the control device 10.

The control power supply circuit 40 is disposed between the processor 20 and the battery 4 to supply power to the processor 20.

In an embodiment, the control power supply circuit 40 includes an input terminal connected to the battery 4, an output terminal connected to the processor 20, and a voltage regulator disposed between the input terminal and the output terminal. In this case, the voltage regulator may have a function to convert an output voltage of the battery 4 to a voltage suitable for input of the processor 20.

The switching contact unit 50 is disposed between the inverter circuit 30 and the battery 4, and is configured to switch a connection state between the inverter circuit 30 and the battery 4.

The switching contact unit 50 may include, for example, either a contact switch or a non-contact switch. A relay as a component of the switching contact unit 50 may be, for example, a relay of the contact switch or a mechanical relay connected by energizing a driving coil by an external signal, or may be, as a relay of the non-contact switch, for example, a semiconductor relay using a semiconductor element represented by a FET. Further, the switching contact unit 50 may include at least one main contact disposed between the inverter circuit 30 and the battery 4, and a precharge contact for protecting the main contact from an inrush current.

In the exemplary embodiment shown in FIG. 1, the control device 10 includes both the control power supply circuit 40 and the switching contact unit 50.

However, the switching contact unit 50 can be omitted depending on operating conditions (a rated voltage, a rated current) of the inverter circuit 30. Therefore, in another embodiment, the control device 10 includes only the control power supply circuit 40 as the power supply part. In this case, the inverter circuit 30 is directly connected to the battery 4.

Further, if the output voltage of the battery 4 matches the input voltage to the processor 20, the control power supply circuit 40 can also be omitted. Therefore, in still another embodiment, the control power supply circuit 40 as the power supply part is omitted and the processor 20 is directly connected to the battery 4.

The processor 20 is a computing device that can be operated by receiving power supply from the battery 4. In an embodiment, power from the battery 4 is supplied to the processor 20 via the above-described control power supply circuit 40.

The processor 20 may be, for example, a Micro Controller Unit (MCU) or a Micro Processor Unit (MPU).

The processor 20 is configured to receive an external signal ES from a host controller 100 and control each part of the control device 10 in response to the external signal ES.

In some embodiments, the external signal ES from the host controller 100 includes a first external signal ES1 indicating a motor drive command or a motor stop command, and a second external signal ES2 for switching the connection state between the inverter circuit 30 and the battery 4. The processor 20 is configured to behave as follows in response to the external signal ES received from the host controller 100.

When the processor 20 receives the first external signal ES1 indicating the motor drive command or the motor stop command from the host controller 100, the processor 20 generates a control command with respect to the inverter circuit 30 in response to the first external signal ES 1.

Herein, the control command with respect to the inverter circuit 30 is a power supply command to adjust power supply to the coil 2 of the motor 1.

The power supply command with respect to the inverter circuit 30 is not particularly limited, but may be, for example, a pulse width modulation (PWM) system that controls the output voltage to the coil 2 by a duty ratio. The PWM system control command is specifically a PWM signal based on the duty ratio calculated by the processor 20. Another example of the power supply command with respect to the inverter circuit 30 is a pulse amplitude modulation (PAM) system control command.

When the processor 20 receives the motor drive command as the first external signal ES1 from the host controller 100, the processor 20 gives the inverter circuit 30 the power supply command which may be the PWM signal, for example. In contrast, when the processor 20 receives the motor stop command as the first external signal ES1, the processor 20 gives the inverter circuit 30 a control command to stop power supply to the coil 2 of the motor 1.

Meanwhile, when the processor 20 receives the second external signal ES2 for switching the connection state between the inverter circuit 30 and the battery 4 from the host controller 100, the processor 20 generates an operating command with respect to the switching contact unit 50 in response to the second external signal ES2.

Specifically, when the second external signal ES2 is "ON", the processor 20 closes the switching contact unit 50 to electrically connect the inverter circuit 30 to the battery 4. In contrast, when the second external signal ES2 is "OFF", the processor 20 opens the switching contact unit 50 to disconnect the inverter circuit 30 from the battery 4.

The inverter circuit 30 controls power supply to the coil 2 of the motor 1 by adjusting an output voltage or an output current, based on the control command from the processor 20.

The inverter circuit 30 includes a semiconductor switching element that operates in response to the control command from the processor 20. An example of the semiconductor switching element forming the inverter circuit 30 includes a FET (Field Effect Transistor), an IGBT (Insulated Gate Bipolar Transistor), etc.

When the control command from the processor 20 is a PWM signal, the inverter circuit 30 controls the output voltage in a sinusoidal manner based on the PWM signal so as to realize a continuously changing duty ratio. When a pseudo sine wave output from the inverter circuit 30 is applied to the coil 2, a current flows through the coil 2, rotating the motor 1.

Herein, the motor 1 is a driving motor that operates under power supply control by the inverter circuit 30. The motor 1 does not originally rotate in a state where the inverter circuit 30 stops power supply to the coil 2 of the motor 1 under the control of the processor 20.

However, the motor 1 may forcibly be turned due to an external force acting on a shaft of the motor 1, even in a state where power is not supplied to the coil 2 of the motor 1.

For example, if the motor 1 is the driving motor for the electric vehicle, the motor 1 which is not in operation can forcibly be turned by an external force when the electric vehicle is towed. Alternatively, if the motor 1 is the electric propulsion device for the ship, the motor 1 of the electric propulsion device may forcibly be turned by a fluid force during navigation using another propulsion device attached to the electric propulsion device.

A voltage is induced in the coil 2 of the motor 1 when the motor 1 is forcibly turned. This voltage is proportional to the number of rotations of the motor 1 due to the external force. If the induced voltage in the coil 2 becomes excessive, there is a risk that the overvoltage is applied to the inverter circuit 30 connected to the coil 2 of the motor 1 and its peripheral circuit, and the battery, heat generation, ignition, etc. is caused by over withstanding voltage or overcharging, and these circuits fail.

Therefore, in some embodiments, in order to protect the inverter circuit 30 and its peripheral circuit from the voltage induced in the coil 2 when the motor 1 is forcibly turned by the external force, the control device 10 includes a switching circuit 60 disposed between the inverter circuit 30 and the coil 2 of the motor 1.

The switching circuit 60 has a function of switching between an energized state where the inverter circuit 30 and the coil 2 are energized and a non-energized state where the inverter circuit 30 is electrically disconnected from the coil 2.

The switching circuit 60 includes a plurality of semiconductor switching elements that operate in response to the control command from the processor 20. An example of the semiconductor switching elements forming the switching circuit 60 includes the FET (Field Effect Transistor), the IGBT (Insulated Gate Bipolar Transistor), etc. An n-channel FET is lower in cost than other switching elements, and is thus suitable as a component of the switching circuit 60.

The switching element of the switching circuit 60 is desirably set in consideration of a maximum induced voltage Vmax of the coil 2, which corresponds to the maximum number of forced rotations of the motor 1 caused by the external force. For example, the switching circuit 60 may be adopted which includes a switching element having a withstand voltage not less than the maximum induced voltage Vmax of the coil 2, which corresponds to the maximum number of forced rotations of the motor 1.

The operation of the switching circuit 60 is controlled by the processor 20.

Specifically, the processor 20 gives a first disconnection command to the switching circuit 60, when the rotation of the motor 1 is detected in the state where power is not supplied to the coil 2. The switching circuit 60 electrically disconnects the inverter circuit 30 from the coil 2 in response to the first disconnection command from the processor 20.

The first disconnection command is autonomously generated by the processor 20 regardless of the external signal ES from the host controller 100. Therefore, depending on the nature of the device driven by the motor 1, it may be desirable to inform a user of the device (for example, if the motor 1 is the motor for the electric propulsion device for the ship, the user of the electric propulsion device, that is, a driver of the ship) of the fact that the first disconnection command has been issued.

In this case, the processor 20 may give the first disconnection command to the switching circuit 60 and output an alarm indicating the issuance of the first disconnection command, when the rotation of the motor 1 is detected in the state where power is not supplied to the coil 2. At this time, the alarm from the processor 20 may be output to a display or a warning light connected to the control device 10.

In some embodiments, as shown in FIG. 1, the control device 10 includes a sensor 70 for detecting the rotation of the motor 1, and the processor 20 is configured to receive a detection signal ω of the rotation of the motor 1 from the sensor 70 and control the switching circuit 60 based on the detection signal ω of the sensor 70.

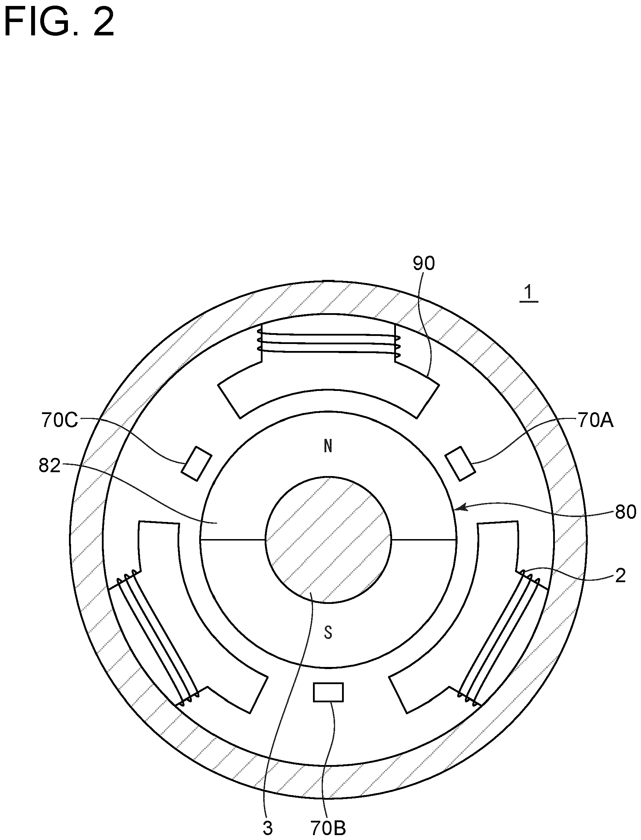

FIG. 2 is a schematic cross-sectional view showing a configuration example of the motor 1 and the sensor 70.

As shown in the drawing, the motor 1 includes a rotor 80 provided with a magnet 82, and a stator 90 disposed to face the rotor 80 in the radial direction and wound with the coil 2. The rotor 80 is rotatable together with a shaft 3 of the motor 1. In the example shown in FIG. 2, the motor 1 is an inner rotor type three-phase brushless motor. In another example, the motor 1 is an outer rotor type three-phase brushless motor.

In an embodiment, the sensor 70 may include the magnet 82 of the rotor 80 and magnetic sensors 70A to 70C for detecting a magnetic field formed by the magnet 82.

In this case, the magnetic sensors 70A to 70C may be hall elements. The hall elements have a function of detecting the rotation of the motor 1 by detecting whether opposing magnetic poles of the magnet 82 are either an N pole or an S pole.

Alternatively, the sensor 70 may be a sensor for detecting the rotation by detecting an induced voltage waveform generated when the motor 1 rotates.

In another embodiment, the sensor 70 may be a resolver or a rotary encoder for detecting a rotational position of the rotor 80.

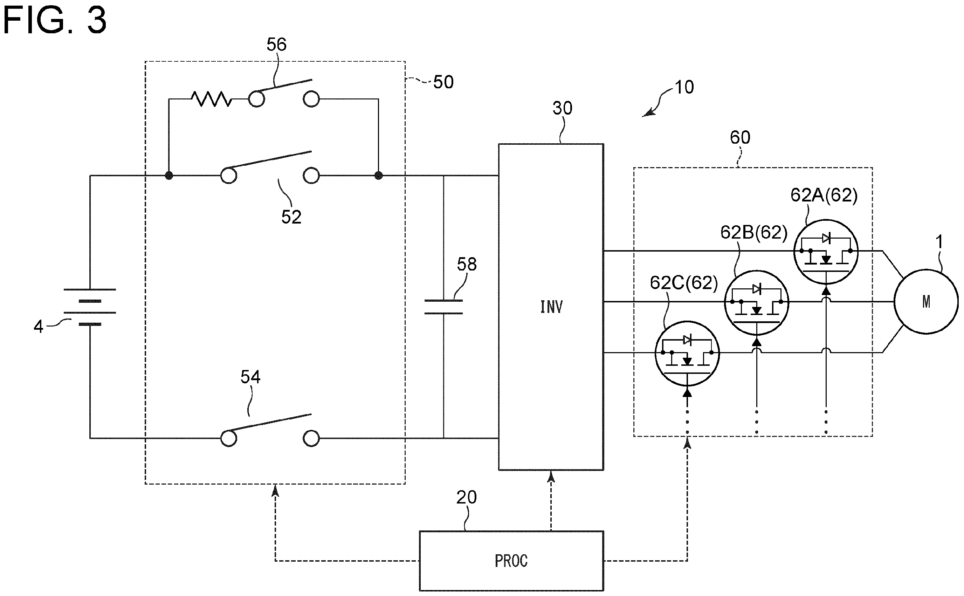

FIG. 3 is a diagram showing the configuration in the vicinity of the switching contact unit 50 of the control device 10 according to an embodiment.

As shown in FIG. 3, in some embodiments, the switching contact unit 50 includes a first main contact 52 disposed on a positive terminal side of the battery 4, a second main contact 54 disposed on a negative terminal (GND terminal) side of the battery 4, and a precharge contact 56 disposed in parallel with the first main contact 52 and to which a resistor is connected in series. The precharge contact 56 has a function of charging a capacitor 58 to a predetermined voltage by being closed before the first main contact 52 and protecting the first main contact 52 from an excessive inrush current.

The first main contact 52, the second main contact 54, and the precharge contact 56 may be either contact switches or non-contact switches. As the component of the switching contact unit 50, for example, the relay of the contact switches may be the mechanical relay connecting by energizing the driving coil by the external signal, and the non-contact switches may be an energization method using the semiconductor element represented by, for example, the FET.

In some embodiments, the switching circuit 60 includes FETs 62 disposed between the inverter circuit 30 and the motor 1 (coil 2). In the embodiment shown in FIG. 3, the switching circuit 60 includes three FETs 62 (62A to 62C) corresponding to the three-phase coil 2 of the motor 1, respectively. Each FET 62 may be an n-channel FET.

The FETs 62 operate in response to the control command from the processor 20, as described above. The switching circuit 60 electrically disconnects the inverter circuit 30 from the coil 2 by turning off the FETs 62 (62A to 62C) in response to the first disconnection command from the processor 20.

In another embodiment, the switching circuit 60 includes a mechanical contact in place of the FETs 62 (62A to 62C).

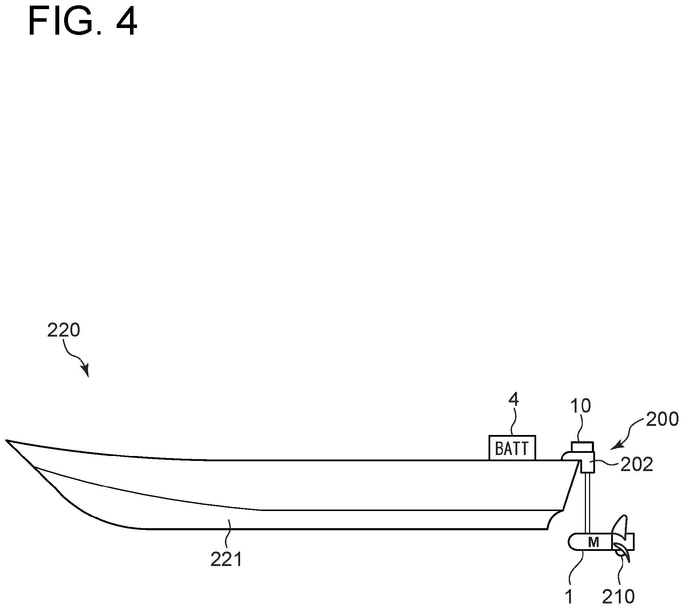

FIG. 4 is a view showing the schematic configuration of the electric propulsion device according to an embodiment.

As shown in the drawing, in some embodiments, an electric propulsion device 200 includes the motor 1, a propeller 210 driven by the motor 1, and the control device 10 for controlling the motor 1. Further, the electric propulsion device 200 includes an attachment 202 that can be attached to a rear portion of a hull 221 of the ship 220. The electric propulsion device 200 is attached to the rear portion of the hull 221 of the ship 220 via the attachment 202.

The ship 220 includes another propulsion device (not shown) in addition to the electric propulsion device 200, and can navigate using the another propulsion device even when the electric propulsion device 200 is not in operation.

The control device 10 of the electric propulsion device 200 includes the processor 20, the inverter circuit 30, and the switching circuit 60, which are described above with reference to FIGs. 1 and 3. The control device 10 is connected to the battery 4 mounted on the hull 221, and power from the battery 4 is supplied to the processor 20 and the inverter circuit 30 of the control device 10. The control device 10 may be mounted near the motor 1.

The processor 20 generates the control command with respect to the inverter circuit 30 in response to the first external signal ES1 from the host controller 100 (see FIG. 1), and gives the first disconnection command to the switching circuit 60 when the rotation of the motor 1 is detected in the state where power is not supplied to the coil 2 of the motor 1.

During navigation by the electric propulsion device 200 for the ship 220, the inverter circuit 30 controls power supply to the coil 2 of the motor 1 in response to the first external signal ES1, and the propeller 210 is driven by the motor 1.

In contrast, when the electric propulsion device 200 stops operation and the ship 220 navigates using the another propulsion device, power is not supplied to the coil 2 of the motor 1 of the electric propulsion device 200, but there is a possibility that the propeller 210 receives the fluid force and the motor 1 is forcibly turned. In case this happens, the processor 20 gives the first disconnection command to the switching circuit 60 when the rotation of the motor 1 is detected in the state where power is not supplied to the coil 2 of the motor 1. Whereby, the inverter circuit 30 is electrically disconnected from the coil 2 of the motor 1, preventing application of the induced voltage generated in the coil 2 to the inverter circuit 30.

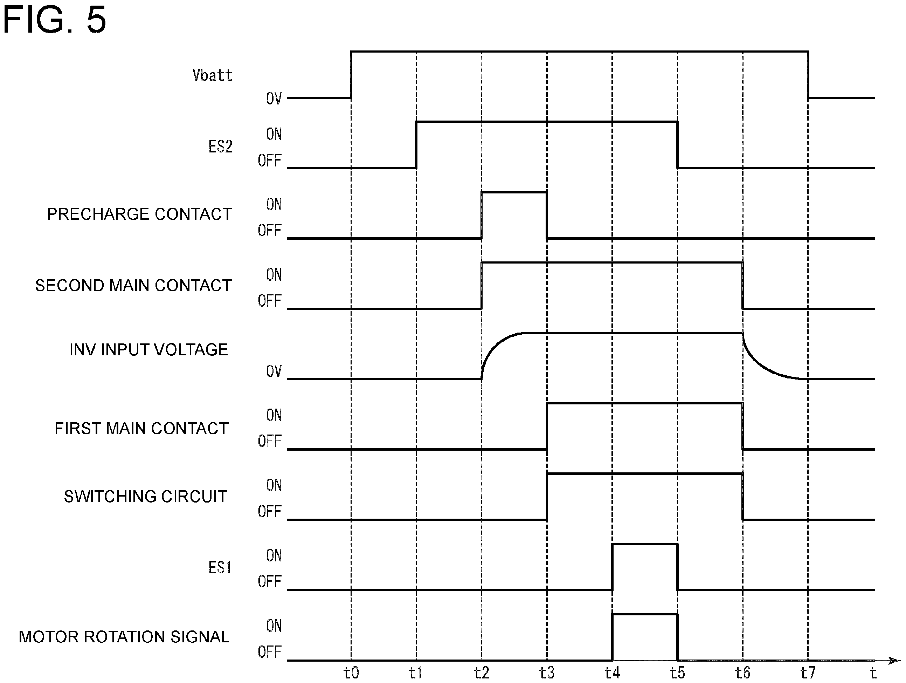

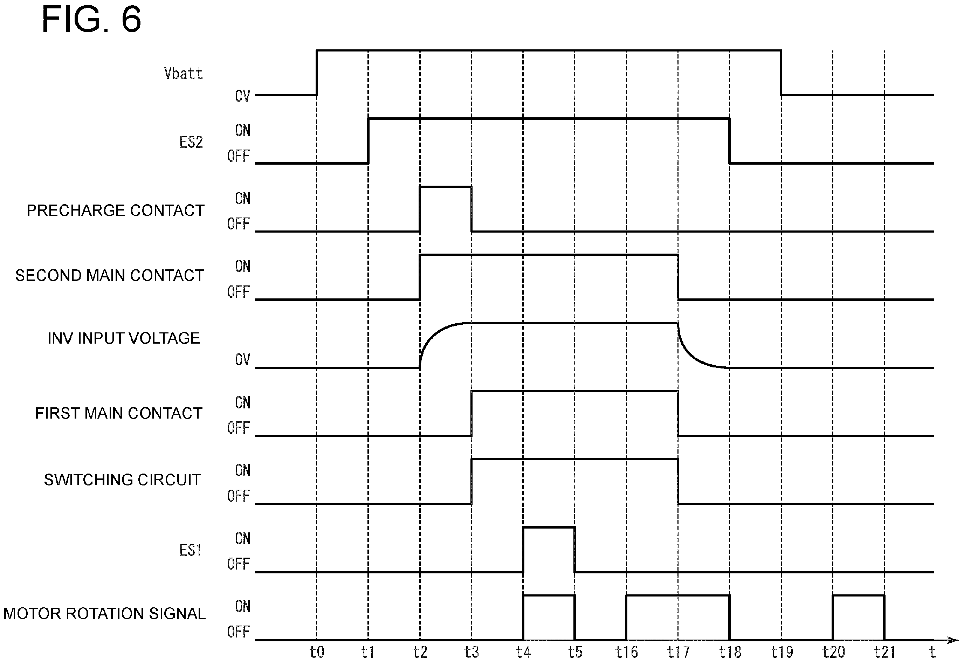

The operation of the control device 10 will be described with reference to FIGs. 5 and 6.

FIG. 5 is a timing chart showing the operation of the control device 10 according to an embodiment, and shows a case where the motor 1 is not forcibly turned by the external force. FIG. 6 is a timing chart showing the operation of the control device 10 according to an embodiment, and shows a case where the motor 1 is forcibly turned by the external force.

The timing charts of FIGs. 5 and 6 are based on the assumption that the control device 10 includes the switching contact unit 50 having the configuration shown in FIG. 3, but the presence or absence of the switching contact unit 50 and the specific configuration of the switching contact unit 50 are not limited to this example.

As shown in FIG. 5, when the battery 4 is powered on at t=t0, power is supplied to the processor 20 via the control power supply circuit 40, and the processor 20 starts controlling each part of the control device 10.

The battery 4 may be powered on, for example, by a user of the device, which is driven by the motor 1, via an operation part such as an ignition key or an ignition switch.

At t=t1, the processor 20 receives an "ON" signal as the second external signal ES2 from the host controller 100, and starts controlling the switching contact unit 50.

Specifically, at t=t1, the processor 20 sends a closing operation command ("ON" control command) to the precharge contact 56 and the second main contact 54 of the switching contact unit 50. At t=t2, in response to the "ON" control command from the processor 20, the precharge contact 56 and the second main contact 54 of the switching contact unit 50 perform closing operation. Along therewith, charging of the capacitor 58 disposed on an input side of the inverter circuit 30 is started, and an input voltage of the inverter circuit 30 (an INV input voltage in FIG. 5) increases until the input voltage of the inverter circuit 30 reaches the output voltage of the battery 4.

When the input voltage of the inverter circuit 30 reaches a predetermined voltage, the processor 20 sends an opening operation command ("OFF" control command) to the precharge contact 56, and sends the closing operation command ("ON" control command) to the first main contact 52. As a result, at t=t3, the precharge contact 56 performs opening operation in response to the "OFF" control command from the processor 20, and the first main contact 52 performs closing operation in response to the "ON" control command from the processor 20. Whereby, the electrical connection between the battery 4 and the inverter circuit 30 is completed.

The processor 20 sends the "ON" control command to the switching circuit 60 in parallel with the control of the switching contact unit 50 described above, and at t=t3, the switching circuit 60 switches to "ON" in response to the control command from the processor 20.

Whereby, a state is entered in which power can be supplied from the battery 4 to the coil 2 of the motor 1 via the inverter circuit 30.

At t=t4, when the processor 20 receives the "ON" signal as the first external signal ES 1 from the host controller 100, the processor 20 sends the control command (for example, the PWM signal) to the inverter circuit 30, and in response thereto, the inverter circuit 30 starts controlling power supply to the coil 2. As a result, the motor 1 starts rotating, and the rotation of the motor 1 is detected by the sensor 70 ("ON" of a motor rotation signal in FIG. 5).

At t=t5, when the processor 20 receives the "OFF" signal as the first external signal ES 1 from the host controller 100, the processor 20 sends the control command to the inverter circuit 30, and in response thereto, the inverter circuit 30 stops controlling power supply to the coil 2. As a result, the rotation of the motor 1 is stopped, and the stoppage of the rotation of the motor 1 is detected by the sensor 70 ("OFF" of the motor rotation signal in FIG. 5).

Further, at t=t5, the processor 20 sends the opening operation control command ("OFF" control command) to the first main contact 52 and the second main contact 54 and sends the "OFF" control command to the switching circuit 60, in response to the "OFF" signal as the second external signal ES2 from the host controller 100.

As a result, at t=t6, the first main contact 52 and the second main contact 54 perform opening operation to electrically disconnect the inverter circuit 30 from the battery 4, and the switching circuit 60 is also turned "OFF". Thereafter, the capacitor 58 starts discharging, and the input voltage of the inverter circuit 30 drops to zero.

Finally, at t=t7, the battery 4 is powered off, power supply to the processor 20 via the control power supply circuit 40 is stopped, and the processor 20 enters the non-operating state.

In the example shown in FIG. 5, at t=t5, at the same time as the stoppage of the rotation of the motor 1, the processor 20 receives the "OFF" signal of the second external signal ES2, and immediately thereafter, the first main contact 52 and the second main contact 54 start performing opening operation.

In contrast, in the example shown in FIG. 6, after the rotation of the motor 1 stops at t=t5, the second external signal ES2 remains "ON" for a period of t≤t18. A period from t0≤t≤t5 in FIG. 6 is the same as the timing chart of FIG. 5.

At t=t16 in FIG. 6, the first external signal ES1 is "OFF", and power supply to the coil 2 of the motor 1 is stopped. When the motor 1 is forcibly turned by the external force in this state, the rotation of the motor 1 is detected by the sensor 70, and the processor 20 gives the first disconnection command to the switching circuit 60 in response to a rotation detection signal of the motor 1 by the sensor 70. As described above, since the second external signal ES2 from the host controller 100 remains "ON" at t=t16, the generation of the first disconnection command by the processor 20 is not due to the response to the second external signal ES2, but is due to autonomous operation of the processor 20.

Thereafter, at t=t17, the switching circuit 60 is switched to "OFF" by the first disconnection command, and the inverter circuit 30 is electrically disconnected from the coil 2 of the motor 1.

Further, at t=t16, when the processor 20 receives the rotation detection signal of the motor 1 by the sensor 70 in the state where power is not supplied to the coil 2, the processor 20 gives the switching contact unit 50 the second disconnection command to disconnect the connection between the inverter circuit 30 and the battery 4, regardless of the second external signal ES2. That is, at t=t16, the processor 20 sends the opening operation control command ("OFF" control command) to the first main contact 52 and the second main contact 54. The generation of the second disconnection command by the processor 20 at t=t16 is not due to the response to the second external signal ES2, but is due to the autonomous operation of the processor 20.

Thereafter, at t=t17, the first main contact 52 and the second main contact 54 perform opening operation in response to the second disconnection command, and the inverter circuit 30 is electrically disconnected from the battery 4. Along therewith, the capacitor 58 starts discharging, and the input voltage of the inverter circuit 30 starts to drop.

Thereafter, at t=t19, the battery 4 is powered off, power supply to the processor 20 via the control power supply circuit 40 is stopped, and the processor 20 enters the non-operating state. Since then, the control device 10 has stopped operation, and thus, at t=t20, the control device 10 is not controlled in response to the rotation detection signal of the sensor 70 even if the motor 1 is forcibly turned by the external force. However, since the switching contact unit 50 and the switching circuit 60 are each in the "OFF" state, the induced voltage generated in the coil 2 due to the external force is not applied to the inverter circuit 30 and its peripheral circuit.

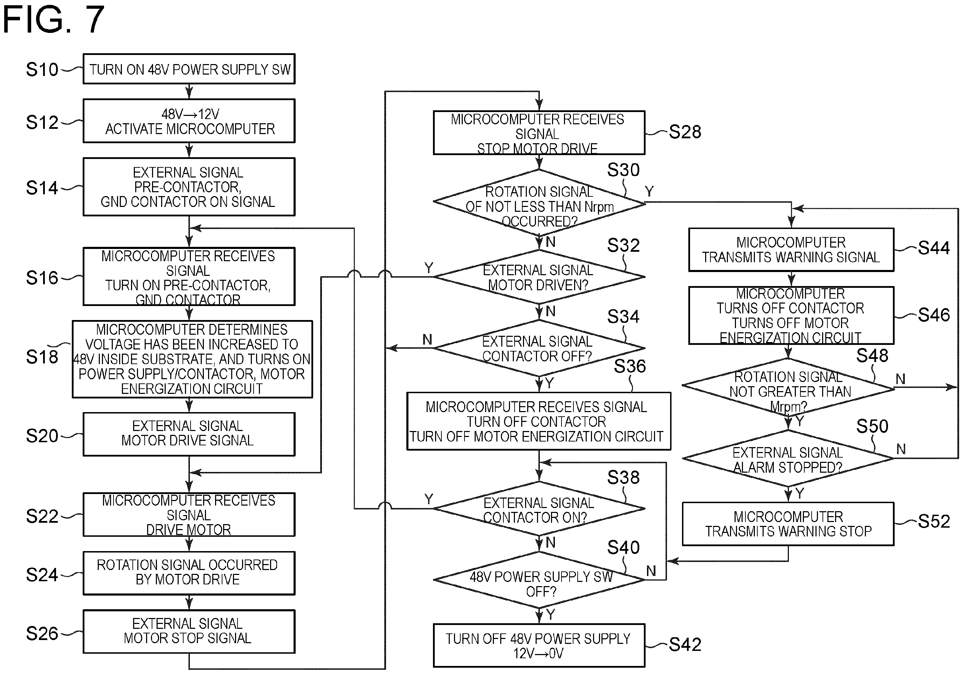

Subsequently, a specific example of a procedure for controlling the motor 1 by the control device 10 will be described with reference to FIG. 7. However, the contents described with reference to FIG. 7 are merely an example, and do not limit the scope of the present invention.

FIG. 7 is a flowchart showing the procedure for controlling the motor 1 according to an embodiment. In the example shown in the drawing, when a 48V power supply switch of the battery 4 is turned on (step S10), the voltage is converted from 48V to 12V in the control power supply circuit 40, activating the processor 20 which may be a microcomputer (step S12). In step S14, the processor 20 which may be the microcomputer receives the "ON" signal as the second external signal ES2 from the host controller 100 (step S14). The processor 20 which may be the microcomputer starts controlling the switching contact unit 50 and turns on the precharge contact (pre-contactor) 56 and the second main contact 54 (GND contactor) (step S16). When the processor (microcomputer) 20 determines that the input voltage of the inverter circuit 30 (the voltage inside the substrate) is increased to 48V, the processor (microcomputer) 20 turns on the first main contact (power supply/contactor) 52 and the switch circuit (motor energization circuit) 60 (step S18). In step S20, the processor 20 receives the "ON" signal (motor drive signal) as the first external signal ES1 from the host controller 100. In step S22, the inverter circuit 30 starts controlling power supply to the coil 2 in response to the control command from the processor (microcomputer) 20, driving the motor 1. The rotation signal of the motor 1 is detected by the sensor 70 (step S24). When the processor 20 receives the "OFF" signal (motor stop signal) as the first external signal ES1 (step S26), the inverter circuit 30 stops driving the motor 1 in response to the control command from the processor (microcomputer) 20 (step S28).

Thereafter, the state of the motor 1 is monitored by the sensor 70, and if the rotation signal of the motor 1 is less than Nrpm (N in step S30), the processor (microcomputer) 20 determines whether or not the "ON" signal (motor drive signal) is received as the first external signal ES1 from the host controller 100 (step S32). If the motor drive signal is received (Y in step S32), the process returns to step S22. If the motor drive signal is not received (N in step S32), the process advances to step S34, and the processor (microcomputer) 20 determines whether or not the "OFF" signal is received as the second external signal ES2 from the host controller 100. If the "OFF" signal is not received as the second external signal ES2 (N in step S34), the process returns to step S28. In contrast, if the "OFF" signal is received as the second external signal ES2 (Y in step S34), the process advances to step S36, and in response to the control command from the processor (microcomputer) 20, the contactors (52, 54, 56) and the switch circuit (motor energization circuit) 60 are turned off. Thereafter, the processor (microcomputer) 20 determines whether or not the "ON" signal is received as the second external signal ES2 from the host controller 100 (step S38). If the "ON" signal is received as the second external signal ES2 (Y in step S38), the process returns to step S16. In contrast, if the "ON" signal is not received as the second external signal ES2 (N in step S38), the process advances to step S40, and it is determined whether the 48V power supply switch of the battery 4 is turned off (step S40), and if the 48V power supply switch is turned off, the battery 4 is powered off, the input voltage to the processor (microcomputer) 20 via the control power supply circuit 40 becomes 0V, and the processor (microcomputer) 20 stops operation (step S42). In contrast, if the 48V power supply switch is not turned off (N in step S40), the process returns to step S38.

In step S30, if the rotation signal of the motor 1 is not less than Nrpm (Y in step S30), the processor (microcomputer) 20 transmits a warning signal (alarm) (step S44), gives the first disconnection command and the second disconnection command to the switching circuit 60 and the switching contact unit 50, respectively, and turns off the contactors (52, 54, 56) and the switch circuit (motor energization circuit) 60 (step S46). Thereafter, the state of the motor 1 is monitored by the sensor 70, and if the rotation signal of the motor 1 is greater than Mrpm (N in step S48), the process returns to step S44. In contrast, if the rotation signal of the motor 1 is not greater than Mrpm (Y in step S48), the processor (microcomputer) 20 determines whether or not the alarm stop signal is received from the host controller 100 (step S50). If the processor (microcomputer) 20 receives the alarm stop signal (Y in step S50), the processor (microcomputer) 20 stops issuance of the alarm (step S52), and the process moves to step S38. In contrast, if the alarm stop signal is not received (N in step S50), the process returns to step S44.

A threshold M [rpm] of the number of rotations of the motor 1 in step S48 is preferably less than a threshold N [rpm] of the number of rotations of the motor 1 in step S30.

The characteristic configurations of the control device10 and the electric propulsion device 200 according to some embodiments described above are summarized as follows.
[1] A control device (10) for a motor (1) according to some embodiments, includes: a processor (20) for generating a control command for power supplied to a coil (2) of the motor (1); an inverter circuit (30) for controlling, based on the control command of the processor (20), the power supplied to the coil (2) of the motor (1); and a switching circuit (60) disposed between the inverter circuit (30) and the coil (2) of the motor (1), and configured to switch between an energized state where the inverter circuit (30) and the coil (2) are energized and a non-energized state where the inverter circuit (30) is electrically disconnected from the coil (2). The processor (20) is configured to give the switching circuit (60) a first disconnection command to switch from the energized state to the non-energized state, when rotation of the motor (1) is detected in a state where the power is not supplied to the coil (2).

According to the above configuration [1], when the rotation of the motor (1) is detected in the state where the power is not supplied to the motor coil (2), the inverter circuit (30) is electrically disconnected from the motor coil (2) by the operation of the switching circuit (60) based on the first disconnection command from the processor (20).

Whereby, it is possible to protect, with the simple configuration and high reliability, the inverter circuit (30) and its peripheral circuit from the voltage induced in the motor coil (2) in case the motor (1) rotates due to the external force.

[2] In some embodiments, in the above configuration [1], the control device (10) includes at least one switching contact unit (50) disposed between the inverter circuit (30) and a battery (4). The processor (20) is configured to: receive a first external signal (ES1) indicating a drive command or a stop command for the motor (1) from a host controller (100), and generate the control command with respect to the inverter circuit (30) in response to the first external signal (ES1); receive a second external signal (ES2) for switching a connection state between the inverter circuit (30) and the battery (4) from the host controller (100), and operate the switching contact unit (50) in response to the second external signal (ES2); and when the rotation of the motor (1) is detected in the state where the power is not supplied to the coil (2), give the switching circuit (60) the first disconnection command and give the switching contact unit (50) a second disconnection command to disconnect connection between the inverter circuit (30) and the battery (4), regardless of the first external signal (ES1) and the second external signal (ES2).

In the above configuration (2), when the rotation of the motor (1) is detected in the state where the power is not supplied to the coil (2), the processor (20) autonomously gives the first disconnection command and the second disconnection command to the switching circuit (60) and the switching contact unit (50), respectively, regardless of the external signals (ES1, ES2).

Whereby, it is possible to protect, with higher reliability, the inverter circuit (30) and its peripheral circuit from the voltage induced in the motor coil (2) in case the motor (1) rotates due to the external force.

[3] In some embodiments, in the above configuration [1] or [2], the switching circuit (60) includes a plurality of switching elements (semiconductor switching elements).

According to the above configuration [3], it is possible to immediately disconnect the inverter circuit (30) from the motor coil (2) in quick response to the control command (second disconnection command) from the processor (20).

[4] In some embodiments, in any of the above configurations [1] to [3], the processor (20) is configured to output an alarm indicating issuance of the first disconnection command, when the rotation of the motor (1) is detected in the state where the power is not supplied to the coil (2).

The first disconnection command is autonomously generated by the processor (20) regardless of the external signal (ES) from the host controller (100). Therefore, depending on the nature of the device driven by the motor (1), it may be desirable to inform a user of the device of the fact that the first disconnection command has been issued.

In this regard, according to the above configuration [4], it is possible to inform the user of the device of the fact that the first disconnection command has been issued, by the alarm output from the processor (20).

The device user who learns, through the alarm, of the fact that the first disconnection command has been issued may perform additional operation to protect the motor (1). For example, the additional operation by the device user includes operation to power off the battery (4) or operation to move the motor (1) so that no external force is input to the motor (1). As the latter, considered is operation to move the propeller (210) of the electric propulsion device (200), which is mounted with the motor (1), above a water surface.

[5] In some embodiments, in any of the above configurations [1] to [4], the control device (10) includes a sensor (70) for detecting the rotation of the motor (1). The processor (20) is configured to receive a detection signal (ω) of the rotation of the motor (1) from the sensor (70) and control the switching circuit (60) based on the detection signal (ω).

According to the above configuration [5], the sensor (70) can detect that the motor (1) is forcibly turned by the external force, and the detection signal (ω) of the sensor (70) can be used as a trigger for starting control of the switching circuit (60) in the processor (20).

[6] In some embodiments, in the above configuration [5], the sensor (70) includes: a magnet (82) disposed in a rotor (80) of the motor (1); and a magnetic sensor (70A to 70C) for detecting a magnetic field formed by the magnet (82).

According to the above configuration [6], the sensor (70) can be incorporated inside the motor (1), and with the compact and simple configuration, it is possible to detect that the motor (1) is forcibly turned by the external force.

[7] An electric propulsion device (200) for a ship (220) according to some embodiments, includes: a motor (1); a propeller (210) driven by the motor (1); and the control device (10) according to any of the above configurations [1] to [6] for controlling the motor (1).

According to the above configuration [7], even if the propeller (210) receives the fluid force and the motor (1) is forcibly turned during navigation of the ship (220) by using another propulsion device, it is possible to protect, with the simple configuration and high reliability, the inverter circuit (30) and its peripheral circuit from the voltage induced in the motor coil (2), by causing the processor (20) to give the switching circuit (60) the first disconnection command.

Some embodiments of the present invention have been described above, and as a matter of course, the above embodiments may be modified as long as they do not depart from the spirit of the present invention.

For example, the timing charts of FIGs. 5 and 6 are based on based on the configuration example of the switching contact unit 50 shown in FIG. 3, but the control power supply circuit 40 and the switching contact unit 50 are not essential configurations. In the embodiment where the control device 10 does not include the switching contact unit 50, it is sufficient for the operation of the control device 10 to follow the timing charts shown in FIGs. 5 and 6 for the "switching circuit", "ES1", and "motor rotation signal", and the control device 10 does not have to operate according to the timing charts shown in FIGs. 5 and 6 including the "ES2", "precharge contact", "second main contact", "INV input voltage", "first main contact". Further, in the timing charts of FIGs. 5 and 6, for convenience of the description, intervals between adjacent time points (t=t0 to t21) are shown to be equal intervals, but the operation timing of the control device 10 is not limited to this example.

Further, in the present specification, the expressions "comprising", "including" or "having" one constitutional element is not an exclusive expression that excludes the presence of other constitutional elements.

## Claims

1. A control device for a motor, comprising:
a processor for generating a control command for power supplied to a coil of the motor;
an inverter circuit for controlling, based on the control command of the processor, the power supplied to the coil of the motor; and
a switching circuit disposed between the inverter circuit and the coil of the motor, and configured to switch between an energized state where the inverter circuit and the coil are energized and a non-energized state where the inverter circuit is electrically disconnected from the coil,
the processor being configured to give the switching circuit a first disconnection command to switch from the energized state to the non-energized state, when rotation of the motor is detected in a state where the power is not supplied to the coil.

2. The control device for the motor according to claim 1, comprising:
at least one switching contact unit disposed between the inverter circuit and a battery,
wherein the processor is configured to:
receive a first external signal indicating a drive command or a stop command for the motor from a host controller, and generate the control command with respect to the inverter circuit in response to the first external signal;
receive a second external signal for switching a connection state between the inverter circuit and the battery from the host controller, and operate the switching contact unit in response to the second external signal; and
when the rotation of the motor is detected in the state where the power is not supplied to the coil, give the switching circuit the first disconnection command and give the switching contact unit a second disconnection command to disconnect connection between the inverter circuit and the battery, regardless of the first external signal and the second external signal.

3. The control device for the motor according to claim 1 or 2, wherein
the switching circuit includes a plurality of switching elements.

4. The control device for the motor according to claim 1 or 2, wherein
the processor is configured to output an alarm indicating issuance of the first disconnection command, when the rotation of the motor is detected in the state where the power is not supplied to the coil.

5. The control device for the motor according to claim 1 or 2, comprising:
a sensor for detecting the rotation of the motor,
wherein the processor is configured to receive a detection signal of the rotation of the motor from the sensor and control the switching circuit based on the detection signal.

6. The control device for the motor according to claim 5, wherein
the sensor includes:
a magnet disposed in a rotor of the motor; and
a magnetic sensor for detecting a magnetic field formed by the magnet.

7. An electric propulsion device for a ship, comprising:
the motor;
a propeller driven by the motor; and
the control device according to claim 1 or 2 for controlling the motor.
